(19) Europäisches Patentamt European Patent Office Office européen des brevets

(11) **EP 2 571 256 B1**

(12) **EUROPEAN PATENT SPECIFICATION**

(45) Date of publication and mention
of the grant of the patent:
**24.10.2018 Bulletin 2018/43**

(21) Application number: **12181571.6**

(22) Date of filing: **23.08.2012**

(51) Int Cl.:
***H04N 5/57*** *(2006.01)*          ***H04N 5/235*** *(2006.01)*

(54) **EXPOSURE CONTROLLING APPARATUS AND METHOD OF IMAGING ELEMENT, AND IMAGING APPARATUS**

BELICHTUNGSSTEUERUNGSVORRICHTUNG UND VERFAHREN ZUR BILDGEBUNG EINES ELEMENTES, UND BILDGEBUNGSVORRICHTUNG

APPAREIL ET PROCÉDÉ DE COMMANDE D'EXPOSITION D'ÉLÉMENT D'IMAGERIE ET APPAREIL D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2011 JP 2011200690**
**25.07.2012 JP 2012164711**

(43) Date of publication of application:
**20.03.2013 Bulletin 2013/12**

(73) Proprietor: **Ricoh Company, Ltd.**
**Tokyo 143-8555 (JP)**

(72) Inventor: **Ishigaki, Tomoko**
**Tokyo, 143-8555 (JP)**

(74) Representative: **J A Kemp**
**14 South Square**
**Gray's Inn**
**London WC1R 5JJ (GB)**

(56) References cited:
**US-A1- 2006 044 459     US-A1- 2009 073 287**
**US-A1- 2010 066 858**

**Description**

FIELD OF THE INVENTION

The present invention relates to an imaging apparatus, more particularly to exposure controlling technology of an imaging element thereof.

BACKGROUND OF THE INVENTION

An imaging apparatus uses an imaging element such as a CCD and a CMOS sensor. In the imaging apparatus, it is very important to control an exposure amount of the imaging element according to an object illuminance. When the exposure amount is not properly controlled according to the object illuminance, the object on an image is too white (exposure amount is so much that a pixel value is saturated) or too black (exposure amount is so little that a pixel value is close to zero).

In order to properly adjust the exposure amount of the imaging element according to the object illuminance, an automatic exposure control method detecting a luminance level of an image signal produced by the imaging element and controlling an exposure time and a gain (analog gain or digital gain) such that the detected luminance level has a predetermined target value is conventionally known. In this case, the luminance level of an image signal produced by the imaging element is typically controlled to fall between the target value and a predetermined threshold. Namely, when the luminance level of an image signal falls between the target value and the predetermined threshold, the exposure amount is regarded as a proper exposure amount. This is because such a hysteresis prevents proper exposure control from oscillating. Further, an automatic exposure control method using PID (P: proportion, I: integration, D: differential) control is known as well. Even in this case, the coefficient is devised to prevent the oscillation.

However, the conventional exposure control methods of the imaging element have a problem that a signal produced by the imaging element has a luminance level which is not accurately close to a target value. The problem is explained hereafter.

When the exposure amount is small, e.g., the exposure time Ts = 1∗ Trow and this is status A. When the exposure amount is large, e.g., the exposure time T1 = 10∗ Trow and this is status B. Trow is a time for the imaging element to scan a line in a horizontal direction.

In the status A, when the exposure time is increased by a Trow, Ts is 2 ∗ Trow which is twice as large as the original exposure amount. In the status B, when the exposure time is increased by a Trow, Ts is 11 ∗ Trow which is 11/10 = 1.1 as large as the original exposure amount. Even when the exposure time is changed by the same rate, the exposure amount does not evenly change. Namely, in the conventional exposure control methods, a threshold is set regardless of the present exposure amount and only in consideration of a maximum light quantity variation, and the automatic exposure control deteriorates in accuracy when the exposure amount has a specific value or more.

Japanese published unexamined application No. 10-336516 solves the above-mentioned problem by multiplying a target value by a ratio of an exposure time (field number) when switched to another exposure time (field number) when varied next to determine a threshold. However, since the exposure time varies at a constant interval, the exposure amount largely varies when the exposure amount is small (exposure time is short) and the exposure amount less varies when the exposure amount is large (exposure time is long). These are the statuses A and B, respectively. The status A largely varies the exposure amount and the luminance of the image quickly (not smoothly) varies when the exposure amount is switched. Even when the target value the luminance level of an image signal produced by the imaging element should fall in has a hysteresis, the quick luminance variation exceeds the scope of the hysteresis and possibly causes the oscillation. Even when the luminance level is lower than a dark threshold, the exposure time is increased to change the luminance level to be higher than a bright threshold. Then, the exposure time is decreased and the image luminance repeats darkness and brightness.

Because of these reasons, a need exist for an imaging element which does not quickly change in luminance in switching exposure amount (time) particularly when the exposure amount is small (exposure time is short).

US 2006/0044459 and US 2009/0073287 disclose exposure controlling apparatuses according to histogram values of the luminance. US 2010/0066858 discloses an imaging apparatus in which the imaging mode is switched from a normal imaging mode to a composite imaging mode based on a comparison between a brightness rate and an exposure rate.

SUMMARY OF THE INVENTION

Accordingly, one object of the present invention to provide an imaging element which does not quickly change in luminance in switching exposure amount (time) particularly when the exposure amount is small (exposure time is short) in its exposure control.

Another object of the present invention to provide a method of controlling exposure.

These objects and other objects of the present invention, either individually or collectively, have been satisfied by the discovery of an exposure controlling apparatus controlling an exposure amount of an imaging element as defined in the appended claims.

Other objects, features and advantages of the present invention will become apparent upon consideration of the following description of the preferred embodiments of the present invention taken in conjunction with the accompanying drawings.

BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

Fig. 1 is a configuration diagram of an embodiment of the imaging apparatus of the present invention;
Fig. 2 is a view illustrating a specific example of one frame;
Fig. 3 is a functional block diagram of an embodiment of the exposure control unit in Fig. 1;
Fig. 4 is a chart for explaining a range of an image subjected to luminance summation calculation;
Fig. 5 is a process flowchart of an embodiment of CPU of the exposure control unit;
Fig. 6 is a detailed flowchart of the exposure time/gain arithmetic section in Fig. 3;
Fig. 7 is a functional block diagram of another embodiment of the exposure control unit in Fig. 1;
Fig. 8 is a chart showing a specific configuration of a luminance histogram production circuit in Fig. 7;
Fig. 9 is a chart for explaining drawing a line between bright pixels and dark pixels using the luminance histogram; and
Fig. 10 is a timing chart for explaining whole operations of the imaging apparatus.

DETAILED DESCRIPTION OF THE INVENTION

The present invention provides an imaging element which does not quickly change in luminance in switching exposure amount (time) particularly when the exposure amount is small (exposure time is short) in its exposure control.

An embodiment of the present invention is explained, referring to the drawings.

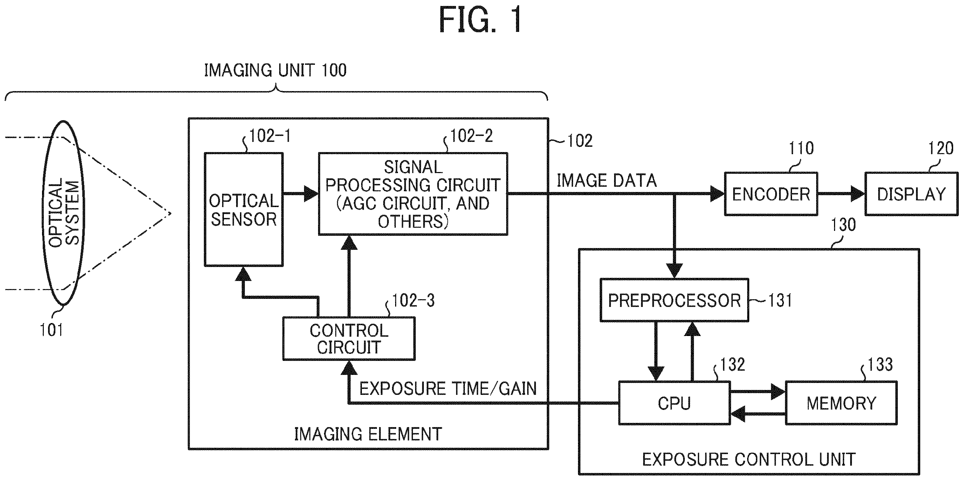

Fig. 1 is a configuration diagram of an embodiment of the imaging apparatus of the present invention. The imaging apparatus includes an imaging unit 100, an encoder 110, a display 120 and an exposure control unit 130 as an exposure controller.

The imaging unit 100 includes an optical system 101 and an imaging element 102. The optical system 101 efficiently condense light from an object to the imaging element 102. The imaging element 102 includes an optical sensor 102-1, a signal processing circuit 102-2 and a control circuit 102-3. The optical sensor 102-1 is a CDD sensor or a CMOS sensor, and converts an optical image of the object into an electrical signal (analog signal) according to its light intensity. The signal processing circuit 102-2 includes an AGC (Automatic Gain Controller) circuit adjusting an analog image signal produced from the optical sensor 102-1 to be a predetermined level, an A/D conversion circuit converting the image signal into a digital signal image data, a $\gamma$ correction circuit executing a $\gamma$ correction on the image data, and circuits executing other image processings. The AGC circuit is formed in a subsequent stage of the A/D conversion circuit and may adjust the digital signal image data to be a predetermined level. The control circuit 102-3 controls operations of the optical sensor 102-1 and the signal processing circuit 102-2. As mentioned later, the control circuit 102-3 receives exposure time and gain information from the exposure control unit per frame to adjust an exposure time (charge accumulation time) of the optical sensor 102-1 and a gain of the AGC circuit in the signal processing circuit 102-2.

The imaging element 102 further includes a vertical/horizontal synchronization signal generation circuit, a pixel clock generation circuit and other timing signal generation circuits.

The imaging element 102 continuously produces image (pixel) data in synchronization with the vertical/horizontal synchronization signal and the pixel clock. At th same time, the imaging element 102 produces the vertical/horizontal synchronization signal, pixel clock and other necessary timing signals.

The encoder 110 sequentially receives image (pixel) data produced from the imaging element 102 together with the vertical/horizontal synchronization signal, pixel clock, etc., and converts the data into, e.g., an NTSC video signal (analog signal). The vertical/horizontal synchronization signal and other various signals are added to the video signal. The display 120 displays the video signal produced from the encoder 110, based on the vertical/horizontal synchronization signal and other signals.

The exposure control unit 130 includes a preprocessor 131, a CPU 132 and a memory 133. The preprocessor 131 sequentially receives image (pixel) data produced from the imaging element 102 together with the vertical/horizontal synchronization signal, pixel clock, etc. and separates the image data into luminance information and a color-difference information, and adds the separated luminance information for one frame to calculate luminance summation per frame. The CPU 132 receives the luminance information per frame calculated by the preprocessor 131 and calculates an optimum exposure amount for the next frame and determines optimum exposure time and gain from the optimum exposure amount to make a luminance level of the image date produced from the imaging element 102 close to a predetermined target value. The CPU 132 sends out the determined optimum exposure time and gain to the control circuit 102-3 of the imaging element 102. The memory 133 includes volatile memories such as RAM and involatile memories such as ROM. The memory 133 memorizes on-the-process data and processing result data in the CPU 132, and programs and parameters needed for the process of the CPU 132.

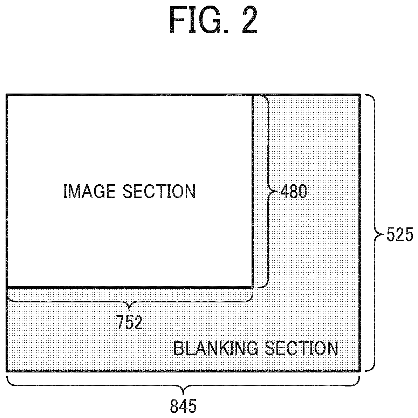

Hereafter, specific configuration and operation of the exposure control unit 130 are explained in detail. As Fig. 2 shows, one frame is formed of 845 columns x 525 rows, and 752 columns x 480 rows out of them are effective image sections. This complies with NTSC method.

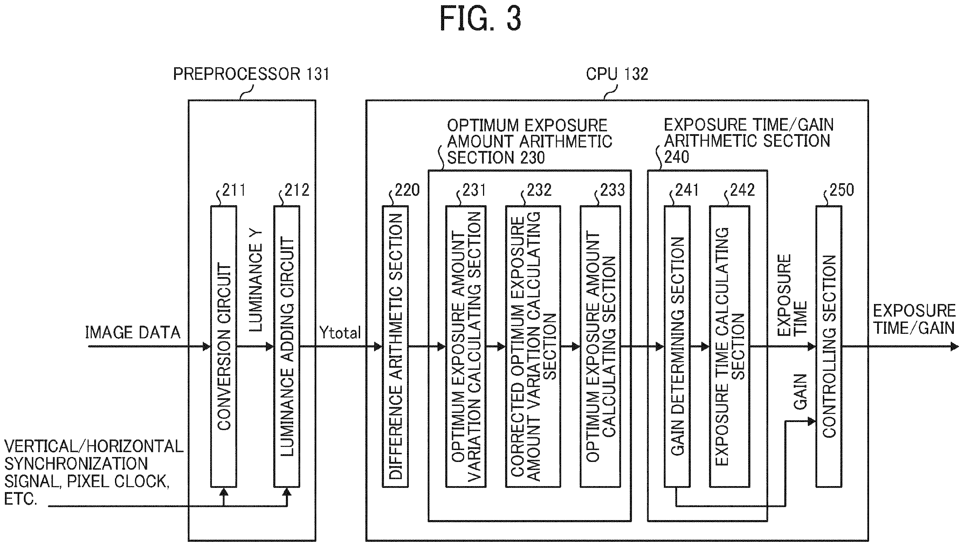

Fig. 3 is a whole functional block diagram of an embodiment of the exposure control unit 130 in Fig. 1. In Fig. 3, the preprocessor 131 is formed of a conversion circuit 211 and a luminance adding circuit 212. An exposure control process function of the CPU 132 is formed of a difference arithmetic section 220, an optimum exposure amount arithmetic section 230, an exposure time/gain arithmetic section 240 and a controlling section 250. Further, the optimum exposure amount arithmetic section 230 is formed of an optimum exposure amount variation arithmetic section 231, a corrected optimum exposure amount variation arithmetic section 232 and an optimum exposure amount calculating section 233. The exposure time/gain arithmetic section 240 is formed of a gain determining section 241 and an exposure time calculation section 242.

The preprocessor 131 needs to process the image data continuously produced from the imaging element 102 one after another in synchronization with the vertical/horizontal synchronization signal, pixel clock, etc. Therefore, the conversion circuit 211 and the luminance adding circuit 212 of the preprocessor 131 are formed of hardware logic. The difference arithmetic section 220, the optimum exposure amount arithmetic section 230, the exposure time/gain arithmetic section 240 and the controlling section 250 work when the CPU 132 executes programs stored in the memory 133. In other words, cooperation of the CPU 132 and the programs make each of the sections work after the difference arithmetic section 220.

The CPU 132 may combine process functions of the conversion circuit 211 and the luminance adding circuit 212 of the preprocessor 131. A hard logic may make process function of each of the sections work after the difference arithmetic section 220 work.

First, operations of the preprocessor 131 are explained. The preprocessor 131 operates in synchronization with the vertical/horizontal synchronization signal, pixel clock, etc., but explanations of the vertical/horizontal synchronization signal, pixel clock, etc. are omitted unless necessary.

The conversion circuit 211 of the preprocessor 131 sequentially receives image (pixel) data produced from the imaging element 102, and converts each of the data into luminance information Y and color-difference information CbCr. The conversion circuit 211 outputs the luminance information Y from the converted luminance information Y and color-difference information CbCr.

When the image data is RGB color image data, the conversion circuit 211 converts the image data into the luminance information Y and the color-difference information CbCr, based on the following formulae.

$$Y = 0.299R + 0.587G + 0.114B$$

$$Cr = 0.500R - 0.419G - 0.081B$$

$$Cb = -0.169R - 0.332G + 0.500B$$

The luminance adding circuit 212 sequentially receives the luminance information Y of each of the image data produced from the conversion circuit 211, and adds the luminance information for one frame to calculate a luminance summation $Y_{total}$ per frame. Namely, $Y_{total}$ represents a luminance summation of the current frame.

In the luminance adding circuit 212, a range of calculating the luminance summation $Y_{total}$ in the frame may be designated from outside.

When the frame has the configuration in Fig. 2, the luminance summation $Y_{total}$ represents a luminance summation of all the pixels of 752 columns x 480 rows. However, all the areas of 752 columns x 480 rows are not always effective images. The upper and lower area or circumferential area are occasionally not effective images. When the range of calculating the luminance summation $Y_{total}$ in the frame is designated from outside, an ineffective image area can be removed from calculation.

The range of calculating the luminance summation $Y_{total}$ in the frame is designated by, e.g., a coordinate with $X_1$ to $X_i$ in a horizontal direction and $Y_1$ to $Y_j$ in a vertical direction. The luminance adding circuit 212 calculates $Y_{total}$ covering pixels included in the designated range for each frame.

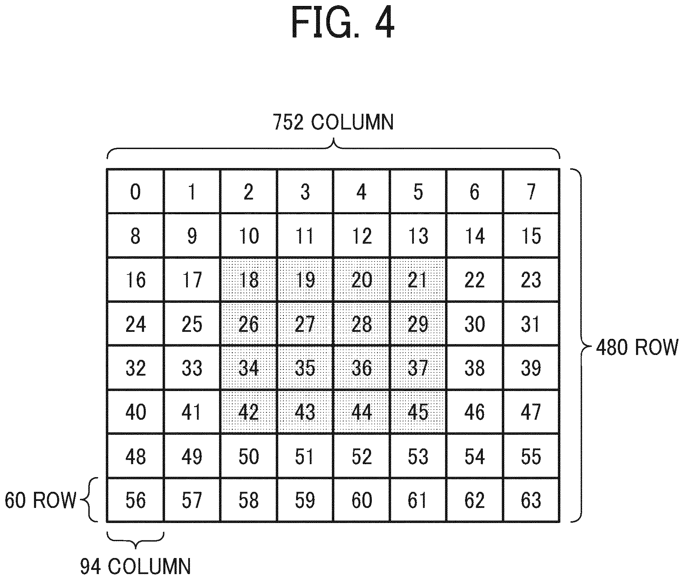

The range of calculating the luminance summation $Y_{total}$ in the frame may be designated by dividing the frame to plural cells and designating the cells. A specific example is shown in Fig. 4. 752 columns x 480 rows of the frame in Fig. 2 is divided into 8 x 8 cells of 94 columns x 60 rows, and the shaded cells cover a range of calculating $Y_{total}$. In Fig. 4, the blanking area is omitted. The luminance adding circuit 212 calculates $Y_{total}$ covering pixels included in the shaded cells in Fig. 4 for each frame.

Te preprocessor 131 transmits an interrupt signal to the CPU 132 every time when calculating a luminance summation $Y_{total}$ of the current frame to send the luminance summation $Y_{total}$ to the CPU 132. The CPU 132 calculates an optimum exposure amount for the next frame, based on the luminance summation $Y_{total}$ of the current frame calculated by the preprocessor 131, and determines an optimum exposure time and a gain from the optimum exposure amount.

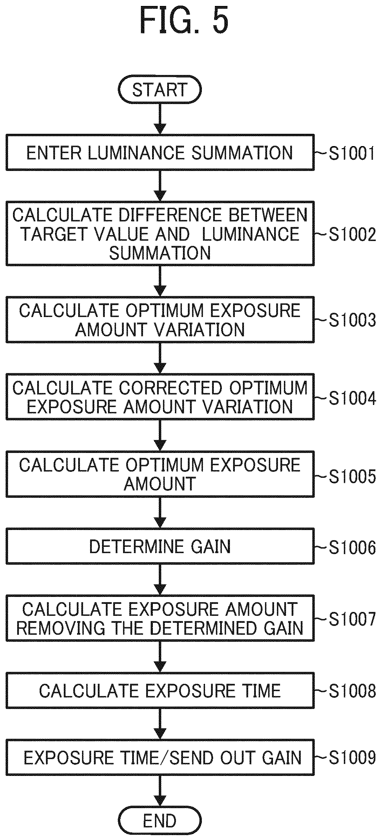

Fig. 5 is a process flowchart of calculating an exposure time/gain executed in the CPU 132. An operation of each of the functions of the CPU 132 is explained according to Fig. 5.

The difference arithmetic section 220 receives the luminance summation $Y_{total}$ from the preprocessor 131 (STEP 1001) and calculates a difference error between a target value $Y_{target}$ and $Y_{total}$ (STEP 1002) by the following formula.

$$error = Y_{target} - Y_{total} \qquad (1)$$

$$Y_{target} = B_{max} * N_{colum}' * N_{row}' * K' \qquad (2)$$

wherein $B_{max}$ is a maximum pixel value (maximum brightness); $N_{colum}'$ is 752 and $N_{row}'$ is 480; and K' is typically about 0.2 and may be 0.4, 0.6, 0.8 and 1.0 according to the circumferential brightness.

The difference error (between the luminance summation of the current frame and the target value) calculated by the difference arithmetic section 220 is sent to the optimum exposure amount arithmetic section 230 and held by the memory 133. The memory 133 holds at least a difference between the luminance summation of the last frame and the target value (error 1) and the luminance summation of the last but one frame and the target value (error 2).

The optimum exposure amount arithmetic section 230 calculates an optimum exposure amount of the optimum exposure amount variation arithmetic section 231, based on the error calculated by the difference arithmetic section 220 as follows.

First, the optimum exposure amount variation arithmetic section 231 calculates an optimum exposure amount variation updata of the following frame with PID control method using the error 1 and the error 2 in addition to the error (STEP 1003) by the following formula:

$$updata = Kp * (error\text{-}error\ 1) + Ki * error$$

$$+ Kd * ((error - error\ 1) - (error\ 1 - error\ 2)) \qquad (3)$$

wherein Kp, Ki and Kd are PID control coefficients and empirically determined. The PID control method is not necessarily used. PD control may be omitted.

Next, the corrected optimum exposure amount variation arithmetic section 232 calculates a corrected optimum exposure amount variation updata' from the optimum exposure amount variation updata calculated by the optimum exposure amount variation arithmetic section 231 (STEP 1004). Namely, updata is corrected by the following formula:

$$updata' = updata * (exposure/exposure_{max}) \qquad (4)$$

wherein exposure is a current exposure amount and $exposure_{max}$ is a maximum exposure amount the imaging element 102 can have (when the exposure time is a maximum exposure time the optical sensor can have). $exposure_{max}$ is determined by the following formula:

$$exposure_{max} = N_{colum} * N_{row} \qquad (5)$$

wherein $N_{colum}$ is 845 and $N_{row}$ is 525.

In the formula (4), when the exposure is small (exposure time is short), updata' is smaller than updata. When the exposure is large (exposure time is long), updata' is almost same as updata. Namely, when the exposure time is short, the exposure amount variation largely influences on the image luminance, but the formula (4) makes updata' small and the influence lessens.

The formula (4) may be changed to the following formula (4') according to $Y_{target}$.

$$updata' = updata * K * (exposure/exposure_{max}) \qquad (4')$$

Relations between the coefficient K and $Y_{target}$ are shows in Table 1.

Table 1

| $Y_{targe}$ | Coefficient K |
|---|---|
| $B_{max} * N_{colum}' * N_{row}' * 0.2$ | 10 |
| $B_{max} * N_{colum}' * N_{row}' * 0.4$ | 6 |
| $B_{max} * N_{colum}' * N_{row}' * 0.6$ | 4 |
| $B_{max} * N_{colum}' * N_{row}' * 0.8$ | 2 |
| $B_{max} * N_{colum}' * N_{row}' * 1.0$ | 1 |

The formula (4') prevents updata' from becoming too small because updata is too corrected when the current exposure amount is extremely low in the formula (4).

Next, the optimum exposure amount calculating section 233 calculates an optimum exposure amount exposure' of the following frame, using the corrected optimum exposure amount variation updata' calculated by the corrected optimum exposure amount variation arithmetic section 232 by the following formula (STEP 1005).

$$exposure' = exposure + updata' \qquad (6)$$

The optimum exposure amount exposure' calculated by the optimum exposure amount arithmetic section 230 is sent to the exposure time/gain arithmetic section 240. The optimum exposure amount exposure' is held by the memory 133 and becomes the current exposure amount exposure by the following optimum exposure amount calculation.

The exposure time/gain arithmetic section 240 calculates a gain and an exposure time of the imaging element 102, based on the optimum exposure amount exposure' calculated by the optimum exposure amount arithmetic section 230 as follows.

The gain determining section 241 classifies the optimum exposure amount exposure' sent by the optimum exposure amount arithmetic section 230 into plural cases according to its size and determines a gain (STEP 1006). The optimum exposure amount exposure' is classified to 6 degrees of cases 0 to 5 according to its size as follows:

Case 0: $exposure' \leq exposure_{min}$      gain single
Case 1: $exposure_{min} < exposure' \leq exposure_{max}$      gain single
Case 2: $exposure_{max} < exposure' \leq 2*exposure_{max}$      gain double
Case 3: $2*exposure_{max} < exposure' \leq 3*exposure_{max}$      gain triple
Case 4: $3*exposure_{max} < exposure' \leq 4*exposure_{max}$      gain quadruple
Case 5: $exposure' < 4*exposure_{max}$      gain quadruple

wherein $exposure_{min}$ is a minimum exposure amount needed by the imaging element 102 (optical sensor 102-1) and $exposure_{max}$ is a maximum exposure amount the imaging element 102 can have (when the exposure time is a maximum exposure time the optical sensor can have).

Further, the gain determining section 241 calculates an exposure amount the determined gain is removed from exposure$_{withoutgain}$ (STEP 1007). This exposure$_{withoutgain}$ is an exposure amount, the exposure time of which is calculated.

$$exposure_{withoutgain} = exposure' - (gain - 1)*exposure_{max} \quad (7)$$

In case 0, exposure$_{min}$ is exposure$_{withoutgain}$. In case 5, exposure$_{max}$ is exposure$_{withoutgain}$.

Namely, while exposure' does not exceed exposure$_{max}$, gain is 1 and exposure' is exposure$_{withoutgain}$. When exposure' is less than exposure$_{min}$, exposure$_{min}$ is exposure$_{withoutgain}$ to secure minimum exposure amount necessary. When exposure' exceeds exposure$_{max}$, the gain is increased twice, triple or quadruple according to its size, and exposure$_{max}$ relevant to the gain is reduced from exposure' to determine exposure$_{withoutgain}$. When exposure' exceeds $4*$exposure$_{max}$, gain is quadruple at maximum, and exposure$_{max}$ is exposure$_{withoutgain}$ to prevent the exposure amount from being too large. The gain is quadruple at maximum, but is typically N times, wherein N is an integer not less than 2.

The gain determining section 241 sends the determined gain to the controlling section 250 and the exposure$_{withoutgain}$ the determined gain is removed from to the exposure time calculation section 242.

The gain determining section 241 receives the exposure$_{withoutgain}$, and calculates an exposure time as follows. (STEP 1008).

$$rowexposure = [exposure_{withoutgain}/N_{column}] \quad (8)$$

$$pixelexposure = exposure_{withoutgain} - [exposure_{withoutgain}*N_{column}]$$

wherein [] is a round integer, rowexposure is a row unit exposure time (exposure time row) and pixelexposure is a pixel unit exposure time (exposure time line). The exposure time calculation section 242 sends the calculated exposure time to the controlling section 250.

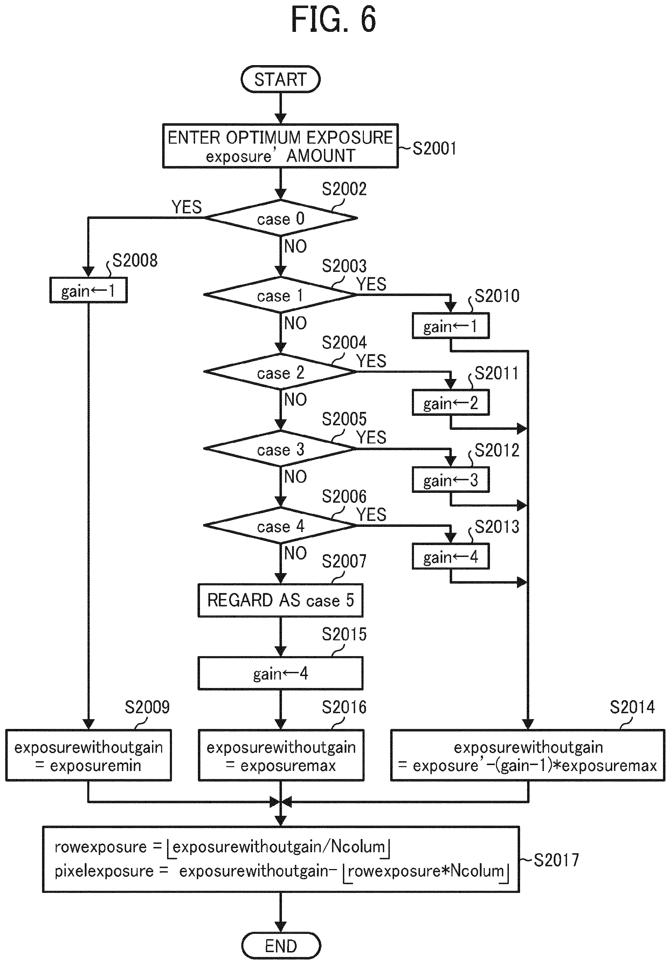

Fig. 6 is a specific flowchart of the exposure time/gain arithmetic section 240 (detailed process flow of STEPS 1006 to 1008 in Fig. 5). The process flow in Fig. 6 repeats per frame.

The gain determining section 241 of the exposure time/gain arithmetic section 240 receives the optimum exposure amount exposure' of the current frame from the optimum exposure amount arithmetic section 230 (STEP 2001) and determines which case (0 to 5) the exposure' is classified to (STEPS 202 to 2007). When classified to case 0, the gain is single (STEP 2008) and the predetermined exposure$_{min}$ is exposure$_{withoutgain}$ regardless of the exposure' (STEP 2009). When classified to case 1, 2, 3 or 4, the gain is single, double, triple or quadruple (STEPS 2010, 2011, 2012 and 2013), and exposure$_{withoutgain}$ is calculated using the formula (7) (STEP 2014). When classified to case 5 (none of cases 0 to 4), the gain is quadruple (STEP 2015) and exposure$_{max}$ is exposure$_{withoutgain}$ (STEP 2016). The exposure time calculation section 242 calculates an exposure time using the formula (8), based on exposure$_{withoutgain}$ (STEP 2017).

Back to Fig. 3, the controlling section 250 receives the exposure time and the again sent from the exposure time/gain arithmetic section 240 and send them to the control circuit 102-3 of the imaging element 102 (STEP 1009). This is repeated per frame.

Next, another embodiment of the present invention is explained. The whole configuration of the imaging apparatus is omitted because of being the same as that in Fig. 1. The preprocessor 131 in the exposure control unit 130 is different from that in Fig. 1.

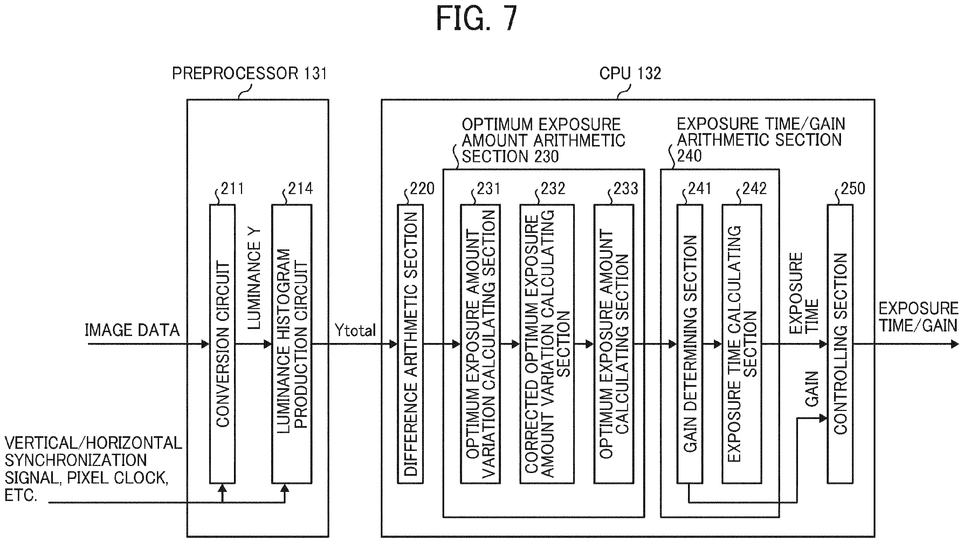

Fig. 7 is a whole functional block diagram of another embodiment of the exposure control unit 130 in Fig. 1. As is apparent from comparison between Figs. 7 and 3, the preprocessor 131 uses a luminance histogram production circuit 214 in place of the luminance adding circuit 212 in Fig. 3. The other configurations are same as those in Fig. 3, the processes in the difference arithmetic section 220 and the optimum exposure amount variation arithmetic section 231 of the optimum exposure amount arithmetic section 230 are slightly different.

Hereafter, the luminance histogram production circuit 214, the difference arithmetic section 220 and the optimum exposure amount variation arithmetic section 231 in Fig. 7 are explained.

The luminance histogram production circuit 214 of the preprocessor 131 sequentially receives luminance information Y of image (pixel) data produced from the conversion circuit 211 and counts the number of pixels of predetermined luminance level for one frame to produce a luminance histogram per frame. A significant image range may be designated from outside for a range of producing the histogram in a frame.

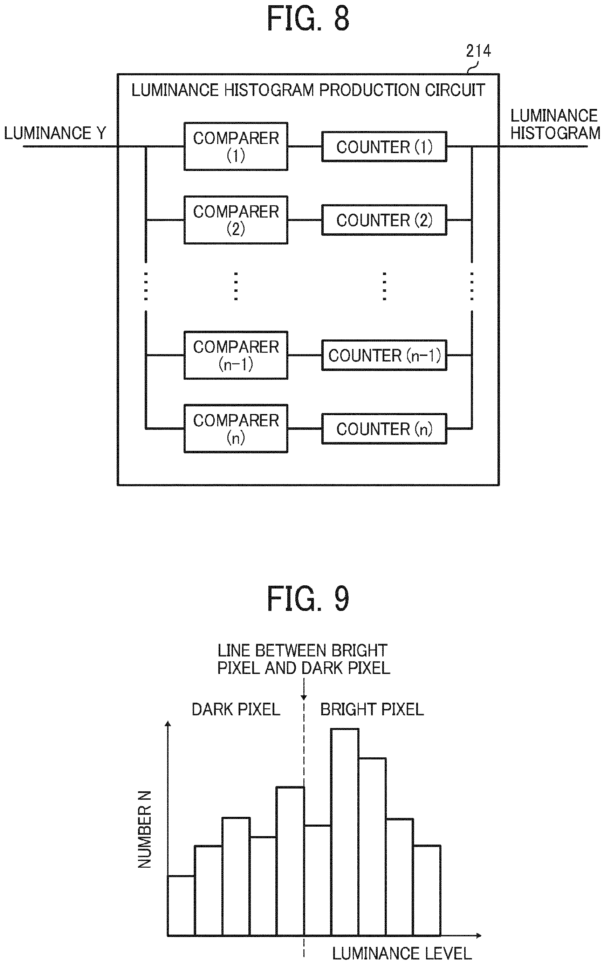

Fig. 8 is a chart showing a specific configuration of the luminance histogram production circuit in 214. The luminance histogram production circuit in 214 has plural comparers (1) to (n) and plural counters (1) to (n). Each of the comparers and counters operates in synchronization with the vertical/horizontal synchronization signal, the pixel clock, but these signals are omitted in Fig. 8.

The luminance information Y produced from the conversion circuit 211 of the preprocessor 131 enters plural comparers (1) to (n). Thresholds are V1, V2...V(n-1) (VI < V2...<V(n-1)). The comparer (1) makes the counter (1) +1 when $Y \leq 1$. The comparer (2) makes the counter (2) +1 when $V1 < Y \leq V2$. Similarly, the comparer (n-1) makes the counter (n-1) +1 when $V(n-2) < Y \leq V(n-1)$. The comparer (n) makes the counter (n) +1 when $Y > V(n-1)$. These are repeated for one frame, and when one frame is finished, a counter value of each of the counters (1) to (n) is produced and the counters (1) to (n) are reset. The same operation is repeated for each frame.

Back to Fig. 7, the difference arithmetic section 220 receives the luminance histogram information from the luminance histogram production circuit in 214 and determines a summation of the number of bright luminance pixels $N_{brightness}$ and a summation of the number of dark luminance pixels of $N_{darkness}$ to calculate a difference error therebetween by the following formula.

$$\text{error} = N_{darkness} - N_{brightness} \qquad (9)$$

Drawing a line between bright luminance pixels and the dark luminance pixels may be determined from outside. In order to make an image brighter, the line is moved to the side of the bright luminance pixels. In order to make an image darker, the line is moved to the side of the dark luminance pixels. Fig. 9 is a chart for explaining drawing a line between bright pixels and dark pixels.

The difference error (between a summation of the number of the bright luminance pixels and a summation of the number of the dark luminance pixels of the current frame) is sent to the optimum exposure amount arithmetic section 230 and held by the memory 113. The memory 113 holds at least a difference (error 1) between a summation of the number of the bright luminance pixels and a summation of the number of the dark luminance pixels of the last frame and a difference (error 2) between a summation of the number of the bright luminance pixels and a summation of the number of the dark luminance pixels of the last but one frame.

The optimum exposure amount variation arithmetic section 231 of the difference arithmetic section 220 calculates an optimum exposure amount variation updata of the following frame with PID control method using the error 1 and the error 2 in addition to the error of the current frame by the following formula:

$$\text{updata} = Kp' * (\text{error-error 1}) + Ki' * \text{error}$$
$$+ Kd' * ((\text{error - error 1}) - (\text{error 1} - \text{error 2})) \qquad (10)$$

wherein Kp', Ki' and Kd' are PID control coefficients and empirically determined. These include normalized coefficients as well.

The other operations of the difference arithmetic section 220, and operations of the exposure time/gain arithmetic section 240 and the controlling section 250 have been already explained and explanations thereof are omitted.

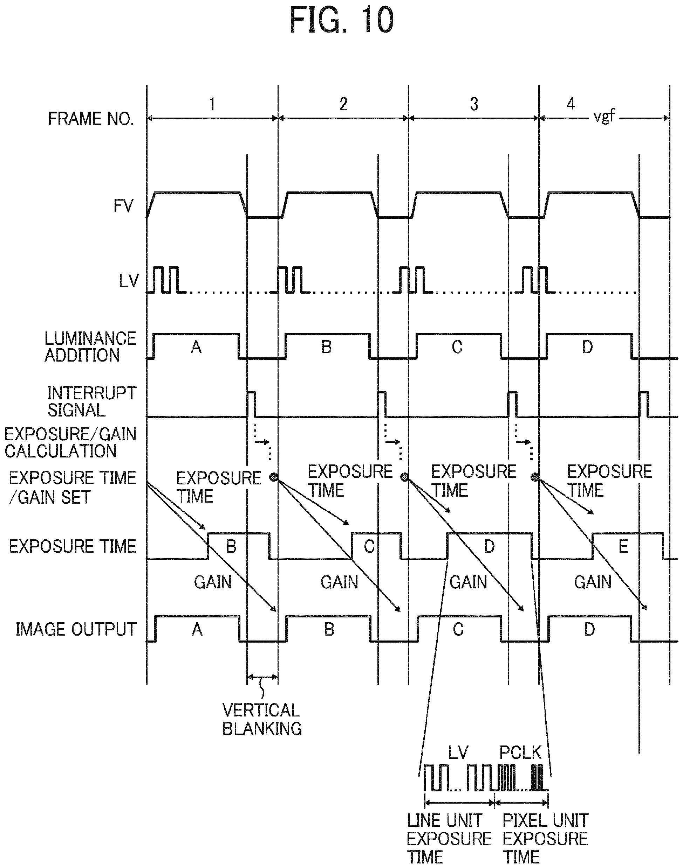

Fig. 10 is a timing chart for explaining whole operations of the imaging apparatus. In Fig. 10, FV is a vertical effective period signal and LV is a horizontal effective period signal, and are produced from the vertical and horizontal synchronization signals, respectively. PCLK is a pixel clock signal.

The imaging element 102 produces image data for each frame during the FV signal period, and at the same time, performs exposure of the following image data. The exposure time includes a row unit exposure time (exposure time row) and a pixel unit exposure time (exposure time line). The maximum exposure time possible is one frame period ($N_{column} * N_{row}$ scanning time).

Now, assuming that the imaging element 102 is producing image data A, and at the same time, performing exposure of the following image data B.

The image data A produced from the imaging element 102 is sent to the encoder 110 and the display 120, and taken in by the exposure control unit 130. The preprocessor 131 of the exposure control unit 130 sequentially adds the FV period of the frame 1 and luminance information of the image data A. The preprocessor 131 transmits an interrupt signal to the CPU 132 when the FV signal falls to send luminance summation information of the image data A to the CPU 132. In Fig. 7, the preprocessor 131 produces a FV period of the frame 1 and a luminance histogram of the image data A, and sends the luminance histogram information to the CPU 132 with an interrupt signal when the FV signal falls.

The CPU 132 uses a vertical blanking period of the frame 1 to calculate an optimum exposure amount, based on the luminance summation information of the image data A or the luminance histogram information thereof, and determines an exposure time and a gain from the optimum exposure amount. The determined exposure time and gain are sent to the imaging element 102 and held thereby.

In the following frame 2, the imaging element 102 produces image data B and parallely performs exposure of the following image data C. The exposure time of the image data C depends on the exposure time calculated from the image data A. Further, in the frame 2, the exposure control unit 130 determines the following exposure time and gain from the image data B as mentioned above.

In the following frame 3, the imaging element 102 produces image data C and parallely performs exposure of the following image data D. The gain of the image data C depends on the gain calculated from the image data A, and the exposure time of the image data D depends on the exposure time calculated from the image data B.

Similarly, in the following frame 4, the imaging element 102 produces image data D and parallely performs exposure of the following image data E. The gain of the image data DC depends on the gain calculated from the image data B, and the exposure time of the image data E depends on the exposure time calculated from the image data C.

In Fig. 10, the exposure time/gain are calculated in the vertical blanking period of each frame. However, the calculation of the exposure time/gain is thought to cross over to the following frame according to the imaging element and an operation speed of the CPU. In this case, image data the calculated exposure time/gain is applied to is delayed by one frame. When the exposure time/gain by the image data A is calculated across the frame, the exposure time/gain is reflected on the image data D of the frames 3 and 4.

## Claims

1. An image forming apparatus for producing a video signal, comprising:

   an optical system (101) configured to form an optical image of an object;
   an imaging element (102) configured to image the optical image and output image data representing an array of pixels in a sequence of frames; and
   an exposure control unit (130) configured to control the imaging element and comprising:

   a first unit (132) configured to determine an optimum exposure amount variation (updata) based on a difference between a sum of luminance values of pixels of a first frame output by the imaging element and a predetermined target value;
   a second unit configured to determine a corrected optimum exposure amount variation (updata') by multiplying the optimum exposure amount variation (updata) by a value derived from dividing a current exposure amount of the first frame (exposure) by a maximum exposure amount (exposure$_{max}$) obtainable by the imaging element;
   a third unit configured to determine an optimum exposure amount (exposure') by adding the corrected optimum exposure amount variation (updata') to the current exposure amount (exposure);
   a fourth unit configured to determine an exposure time according to the optimum exposure amount (exposure'); and
   a fifth unit configured to set the exposure time in the imaging element for a second frame subsequent to the first frame.

2. The image forming apparatus of Claim 1, wherein the optimum exposure amount variation (updata) is determined by the following formula:

$$\text{updata} = \text{Kp} * (\text{error-error 1}) + \text{Ki} * \text{error}$$
$$+ \text{Kd} * ((\text{error - error 1}) - (\text{error 1} - \text{error 2}))$$

   wherein updata represents the optimum exposure amount variation; error represents a difference between a luminance summation (Y$_{total}$) of the current frame and the predetermined target value (Y$_{target}$); error 1 represents a difference between a luminance summation (Y$_{total}$) of the last frame and the predetermined target value (Y$_{target}$); error 2 represents a difference between a luminance summation (Y$_{total}$) of the last frame but one and the predetermined target value (Y$_{target}$); and Kp, Ki and Kd are coefficients.

3. The image forming apparatus of any one of Claims 1 or 2, wherein the second unit determines the corrected optimum exposure amount variation (updata') by further multiplying the optimum exposure amount variation (updata) with a predetermined coefficient.

4. The image forming apparatus of any one of Claims 1 to 3, wherein the exposure controlling apparatus further comprises:

an eighth unit configured to determine a gain of the imaging element when the optimum exposure amount (updata) exceeds the maximum exposure amount (exposure$_{max}$) obtainable by the imaging element such that the gain increases according to the exceeded exposure amount and to determine an exposure amount by removing the increase of the gain from the optimum exposure amount (exposure'),

wherein the fourth unit determines an exposure time according to the exposure amount the increase of the gain is removed from, and

the fifth unit sets the exposure time according to the exposure amount the increase of the gain is removed from and the determined gain in the imaging element.

5. The image forming apparatus of Claim 4, wherein the eighth unit sets the gain as 1 when the optimum exposure amount (exposure') is not greater than a minimum exposure (exposure$_{min}$) amount needed by the imaging element, and the exposure amount as the minimum exposure amount; and

sets the gain as N which is an integer not less than 2 when the optimum exposure amount (exposure') is greater than N times of the maximum exposure amount (exposure$_{max}$), and the exposure amount as the exposure maximum amount (exposure$_{max}$).

6. A method of controlling an exposure amount of an imaging element (102) that outputs image data representing an array of pixels in a sequence of frames for a video signal, the method comprising:

determining an optimum exposure amount variation (updata) based on a difference between a sum of luminance values of pixels of a first frame output by the imaging element and a predetermined target value;
determining a corrected optimum exposure amount variation (updata') by multiplying the optimum exposure amount variation (updata) by a value derived from dividing a current exposure amount of the first frame (exposure) by a maximum exposure amount (exposure$_{max}$) obtainable by the imaging element;
determining an optimum exposure amount (exposure') by adding the corrected optimum exposure amount variation (updata') to the current exposure amount (exposure);
determining an exposure time according to the optimum exposure amount (exposure'); and
setting the exposure time in the imaging element for a second frame subsequent to the first frame.

7. The method of Claim 6, further comprising:

determining a gain of the imaging element when the optimum exposure amount (exposure') exceeds the maximum exposure amount (exposure$_{max}$) obtainable by the imaging element such that the gain increases according to the exceeded exposure amount and to determine an exposure amount by removing the increase of the gain from the optimum exposure amount (exposure'),
wherein the step of determining an exposure time according to the optimum exposure amount (exposure') comprises determining the exposure time according to the exposure amount the increase of the gain is removed from, and
the step of setting the exposure time in the imaging element comprises setting the exposure time according to the exposure amount the increase of the gain is removed from and the determined gain in the imaging element.

**Patentansprüche**

1. Bilderzeugungsvorrichtung zum Erzeugen eines Videosignals, umfassend:

ein optisches System (101), das konfiguriert ist, ein optisches Bild eines Objekts zu erzeugen;
ein Bildgebungselement (102), das konfiguriert ist, das optische Bild und die Ausgangsbilddaten abzubilden, die eine Anordnung von Pixeln in einer Sequenz von Rahmen darstellen; und
eine Belichtungssteuerungseinheit (130), die konfiguriert ist, das Bildgebungselement zu steuern, und umfassend:

eine erste Einheit (132), die konfiguriert ist, eine optimale Belichtungsmengenvariation (updata) basierend auf einer Differenz zwischen einer Summe von Luminanzwerten von Pixeln eines ersten durch das Bildgebungselement ausgegebenen Rahmens und einem vorbestimmten Zielwert zu bestimmen;
eine zweite Einheit, die konfiguriert ist, eine korrigierte optimale Belichtungsmengenvariation (updata') durch Multiplizieren der optimalen Belichtungsmengenvariation (updata) mit einem Wert zu bestimmen, der von einem Teilen einer aktuellen Belichtungsmenge des ersten Rahmens (exposure) durch eine ma-

ximale Belichtungsmenge (exposure$_{max}$) abgeleitet wird, die durch das Bildgebungselement erhaltbar ist; eine dritte Einheit, die konfiguriert ist, eine optimale Belichtungsmenge (exposure') durch Addieren der korrigierten optimalen Belichtungsmengenvariation (updata') mit der aktuellen Belichtungsmenge (exposure) zu bestimmen;

eine vierte Einheit, die konfiguriert ist, eine Belichtungszeit gemäß der optimalen Belichtungsmenge (exposure') zu bestimmen; und

eine fünfte Einheit, die konfiguriert ist, die Belichtungszeit in dem Bildgebungselement für einen zweiten Rahmen im Anschluss an den ersten Rahmen einzustellen.

2. Bilderzeugungsvorrichtung nach Anspruch 1, wobei die optimale Belichtungsmengenvariation (updata) durch die folgende Formel bestimmt wird:

$$\text{updata} = Kp * (\text{error-error } 1) + Ki * \text{error}$$
$$+ Kd * ((\text{error- error } 1) - (\text{error } 1 - \text{error } 2))$$

wobei updata die optimale Belichtungsmengenvariation darstellt; error eine Differenz zwischen einer Lumminanzsummierung (Y$_{total}$) des aktuellen Rahmens und dem vorbestimmten Zielwert (Y$_{target}$) darstellt; error 1 eine Differenz zwischen einer Lumminanzsummierung (Y$_{total}$) des letzten Rahmens und dem vorbestimmten Zielwert (Y$_{target}$) darstellt; error 2 eine Differenz zwischen einer Lumminanzsummierung (Y$_{total}$) des letzten Rahmens außer einem und dem vorbestimmten Zielwert (Y$_{target}$) darstellt; und Kp, Ki und Kd Koeffizienten sind.

3. Bilderzeugungsvorrichtung nach einem der Ansprüche 1 oder 2, wobei die zweite Einheit die korrigierte optimale Belichtungsmengenvariation (updata') durch weiteres Multiplizieren der optimalen Belichtungsmengenvariation (updata) mit einem vorbestimmten Koeffizienten bestimmt.

4. Bilderzeugungsvorrichtung nach einem der Ansprüche 1 bis 3, wobei die Belichtungssteuerungsvorrichtung ferner Folgendes umfasst:

eine achte Einheit, die konfiguriert ist, eine Verstärkung des Bildgebungselements zu bestimmen, wenn die optimale Belichtungsmenge (updata) die maximale Belichtungsmenge (exposure$_{max}$) überschreitet, die durch das Bildgebungselement erhaltbar ist, sodass die Verstärkung gemäß der überschrittenen Belichtungsmenge zunimmt, und eine Belichtungsmenge durch Entfernen der Zunahme der Verstärkung aus der optimalen Belichtungsmenge (exposure') zu bestimmen,

wobei die vierte Einheit eine Belichtungszeit gemäß der Belichtungsmenge bestimmt, aus der die Verstärkung entfernt ist, und

die fünfte Einheit die Belichtungszeit gemäß der Belichtungsmenge, aus der die Verstärkung entfernt ist, und der bestimmten Verstärkung in dem Bildgebungselement einstellt.

5. Bilderzeugungsvorrichtung nach Anspruch 4, wobei die achte Einheit die Verstärkung als 1 einstellt, wenn die optimale Belichtungsmenge (exposure') nicht größer als eine minimale Belichtungsmenge (exposure$_{min}$) ist, die von dem Bildgebungselement benötigt wird, und die Belichtungsmenge als die minimale Belichtungsmenge; und die Verstärkung als N einstellt, das eine ganze Zahl von nicht weniger als 2 ist, wenn die optimale Belichtungsmenge (exposure') größer als die N-fache maximale Belichtungsmenge (exposure$_{max}$) ist, und die Belichtungsmenge als die maximale Belichtungsmenge (exposure$_{max}$).

6. Verfahren zum Steuern einer Belichtungsmenge eines Bildgebungselements (102), das Bilddaten ausgibt, die eine Anordnung von Pixeln in einer Sequenz von Rahmen für ein Videosignal darstellen, wobei das Verfahren Folgendes umfasst:

Bestimmen einer optimalen Belichtungsmengenvariation (updata) basierend auf einer Differenz zwischen einer Summe von Luminanzwerten von Pixeln eines durch das Bildgebungselement ausgegebenen ersten Rahmenes und einem vorbestimmten Zielwert;

Bestimmen einer korrigierten optimalen Belichtungsmengenvariation (updata') durch Multiplizieren der optimalen Belichtungsmengenvariation (updata) mit einem Wert, der von einem Teilen einer aktuellen Belichtungsmenge des ersten Rahmens (exposure) durch eine maximale Belichtungsmenge (exposure$_{max}$) abgeleitet wird, die durch das Bildgebungselement erhaltbar ist;

Bestimmen einer optimalen Belichtungsmenge (exposure') durch Addieren der korrigierten optimalen Belichtungsmengenvariation (updata') mit der aktuellen Belichtungsmenge (exposure);

Bestimmen einer Belichtungszeit gemäß der optimalen Belichtungsmenge (exposure'); und

Einstellen der Belichtungszeit in dem Bildgebungselement für einen zweiten Rahmen im Anschluss an den ersten Rahmen.

**7.** Verfahren nach Anspruch 6, ferner umfassend:

Bestimmen einer Verstärkung des Bildgebungselements, wenn die optimale Belichtungsmenge (exposure') die maximale Belichtungsmenge (exposure$_{max}$) überschreitet, die durch das Bildgebungselement erhaltbar ist, sodass die Verstärkung gemäß der überschrittenen Belichtungsmenge zunimmt, und eine Belichtungsmenge durch Entfernen der Zunahme der Verstärkung aus der optimalen Belichtungsmenge (exposure') zu bestimmen, wobei der Schritt des Bestimmens einer Belichtungszeit gemäß der optimalen Belichtungsmenge (exposure') ein Bestimmen der Belichtungszeit gemäß der Belichtungsmenge umfasst, aus der die Zunahme der Verstärkung entfernt ist, und

der Schritt des Einstellens der Belichtungszeit in dem Bildgebungselement ein Einstellen der Belichtungszeit gemäß der Belichtungsmenge, aus der die Zunahme der Verstärkung entfernt ist, und der bestimmten Verstärkung in dem Bildgebungselement umfasst.

## Revendications

**1.** Appareil de formation d'image pour produire un signal vidéo, comprenant :

un système optique (101) configuré pour former une image optique d'un objet ;

un élément d'imagerie (102) configuré pour imager l'image optique et produire en sortir des données d'image représentant une matrice de pixels dans une séquence de vues ; et

une unité de commande d'exposition (130) configurée pour commander l'élément d'imagerie et comprenant :

une première unité (132) configurée pour déterminer une variation de quantité d'exposition optimum (updata) sur la base d'une différence entre une somme de valeurs de luminance de pixels d'une première vue produite en sortie par l'élément d'imagerie et une valeur cible prédéterminée ;

une deuxième unité configurée pour déterminer une variation de quantité d'exposition optimum corrigée (updata') en multipliant la variation de quantité d'exposition optimum (updata) par une valeur dérivée de la division d'une quantité d'exposition actuelle de la première vue (exposure) par une quantité d'exposition maximum (exposure$_{max}$) pouvant être obtenue par l'élément d'imagerie ;

une troisième unité configuré pour déterminer une quantité d'exposition optimum (exposure') en additionnant la variation de quantité d'exposition optimum corrigée (updata') à la quantité d'exposition actuelle (exposure) ;

une quatrième unité configurée pour déterminer un temps d'exposition selon la quantité d'exposition optimum (exposure') ; et

une cinquième unité configurée pour régler le temps d'exposition dans l'élément d'imagerie pour une seconde vue subséquente à la première vue.

**2.** Appareil de formation d'image selon la revendication 1, dans lequel la variation de quantité d'exposition optimum (updata) est déterminée par la formule suivante :

$$updata = Kp * (error - error\ 1) + Ki * error$$
$$+ Kd * ((error - error\ 1) - (error\ 1 - error\ 2))$$

dans lequel updata représente la variation de quantité d'exposition optimum ; error représente une différence entre une sommation de luminance ($Y_{total}$) de la vue actuelle et la valeur cible prédéterminée ($Y_{target}$) ; error 1 représente une différence entre une sommation de luminance ($Y_{total}$) de la dernière vue et la valeur cible prédéterminée ($Y_{target}$) ; error 2 représente une différence entre une sommation de luminance ($Y_{total}$) de l'avant-dernière vue et la valeur cible prédéterminée ($Y_{target}$) ; et Kp, Ki et Kd sont des coefficients.

**3.** Appareil de formation d'image selon l'une quelconque des revendications 1 ou 2, dans lequel la deuxième unité détermine la variation de quantité d'exposition optimum corrigée (updata') en multipliant en outre la variation de quantité d'exposition optimum (updata) avec un coefficient prédéterminé.

**4.** Appareil de formation d'image selon l'une quelconque des revendications 1 à 3, dans lequel l'appareil de commande d'exposition comprend en outre :

une huitième unité configurée pour déterminer un gain de l'élément d'imagerie lorsque la quantité d'exposition optimum (updata) excède la quantité d'exposition maximum (exposure$_{max}$) pouvant être obtenue par l'élément d'imagerie de telle sorte que le gain augmente selon la quantité d'exposition excédée et pour déterminer une quantité d'exposition en enlevant l'augmentation du gain à partir de la quantité d'exposition optimum (exposure'), dans lequel la quatrième unité détermine un temps d'exposition selon la quantité d'exposition à partir de laquelle l'augmentation du gain est enlevée, et
la cinquième unité règle le temps d'exposition selon la quantité d'exposition à partir de laquelle l'augmentation du gain est enlevée et le gain déterminé dans l'élément d'imagerie.

**5.** Appareil de formation d'image selon la revendication 4, dans lequel la huitième unité règle le gain à 1 lorsque la quantité d'exposition optimum (exposure') n'est pas supérieure à une quantité d'exposition minimum (exposure$_{min}$) requise par l'élément d'imagerie, et la quantité d'exposition à la quantité d'exposition minimum ; et
règle le gain à N qui est un nombre entier relatif non inférieur à 2 lorsque la quantité d'exposition optimum (exposure') est supérieure à N fois la quantité d'exposition maximum (exposure$_{max}$), et la quantité d'exposition à la quantité d'exposition maximum (exposure$_{max}$).

**6.** Procédé de commande d'une quantité d'exposition d'un élément d'imagerie (102) qui produit en sortie des données d'image représentant une matrice de pixels dans une séquence de vues pour un signal vidéo, le procédé comprenant :

la détermination d'une variation de quantité d'exposition optimum (updata) sur la base d'une différence entre une somme de valeurs de luminance de pixels d'une première vue produite en sortie par l'élément d'imagerie et une valeur cible prédéterminée ;
la détermination d'une variation de quantité d'exposition optimum corrigée (updata') en multipliant la variation de quantité d'exposition optimum (updata) par une valeur dérivée de la division d'une quantité d'exposition actuelle de la première vue (exposure) par une quantité d'exposition maximum (exposure$_{max}$) pouvant être obtenue par l'élément d'imagerie ;
la détermination d'une quantité d'exposition optimum (exposure') en additionnant la variation de quantité d'exposition optimum corrigée (updata') à la quantité d'exposition actuelle (exposure) ;
la détermination d'un temps d'exposition selon la quantité d'exposition optimum (exposure') ; et
le réglage du temps d'exposition dans l'élément d'imagerie pour une seconde vue subséquente à la première vue.

**7.** Procédé selon la revendication 6, comprenant en outre :

la détermination d'un gain de l'élément d'imagerie lorsque la quantité d'exposition optimum (exposure') excède la quantité d'exposition maximum (exposure$_{max}$) pouvant être obtenue par l'élément d'imagerie de telle sorte que le gain augmente selon la quantité d'exposition excédée et pour déterminer une quantité d'exposition en enlevant l'augmentation du gain à partir de la quantité d'exposition optimum (exposure'),
dans lequel l'étape de la détermination d'un temps d'exposition selon la quantité d'exposition optimum (exposure') comprend la détermination du temps d'exposition selon la quantité d'exposition à partir de laquelle l'augmentation du gain est enlevée, et
l'étape du réglage du temps d'exposition dans l'élément d'imagerie comprend le réglage du temps d'exposition selon la quantité d'exposition à partir de laquelle l'augmentation du gain est enlevée et le gain déterminé dans l'élément d'imagerie.

## FIG. 1

IMAGING UNIT 100

OPTICAL SYSTEM

101

102-1 — OPTICAL SENSOR

102-2 — SIGNAL PROCESSING CIRCUIT (AGC CIRCUIT, AND OTHERS)

~102

102-3 — CONTROL CIRCUIT

EXPOSURE TIME/GAIN

IMAGING ELEMENT

IMAGE DATA

110 — ENCODER

120 — DISPLAY

130

131 — PREPROCESSOR

132 — CPU

133 — MEMORY

EXPOSURE CONTROL UNIT

# FIG. 2

IMAGE SECTION

480

525

752

BLANKING SECTION

845

# FIG. 3

PREPROCESSOR 131

CPU 132

IMAGE DATA

VERTICAL/HORIZONTAL
SYNCHRONIZATION
SIGNAL, PIXEL CLOCK,
ETC.

211 CONVERSION CIRCUIT

LUMINANCE Y

212 LUMINANCE ADDING CIRCUIT

Ytotal

220 DIFFERENCE ARITHMETIC SECTION

OPTIMUM EXPOSURE AMOUNT ARITHMETIC SECTION 230

231 OPTIMUM EXPOSURE AMOUNT VARIATION CALCULATING SECTION

232 CORRECTED OPTIMUM EXPOSURE AMOUNT VARIATION CALCULATING SECTION

233 OPTIMUM EXPOSURE AMOUNT CALCULATING SECTION

EXPOSURE TIME/GAIN ARITHMETIC SECTION 240

241 GAIN DETERMINING SECTION

242 EXPOSURE TIME CALCULATING SECTION

EXPOSURE TIME

GAIN

250 CONTROLLING SECTION

EXPOSURE TIME/GAIN

EP 2 571 256 B1

# FIG. 4

752 COLUMN

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

480 ROW

60 ROW

94 COLUMN

# FIG. 5

```
                    ( START )
                        │
                        ▼
        ┌─────────────────────────────────┐
        │   ENTER LUMINANCE SUMMATION      │──S1001
        └─────────────────────────────────┘
                        │
                        ▼
        ┌─────────────────────────────────┐
        │ CALCULATE DIFFERENCE BETWEEN     │
        │ TARGET VALUE AND  LUMINANCE      │──S1002
        │           SUMMATION              │
        └─────────────────────────────────┘
                        │
                        ▼
        ┌─────────────────────────────────┐
        │  CALCULATE OPTIMUM EXPOSURE      │
        │      AMOUNT VARIATION            │──S1003
        └─────────────────────────────────┘
                        │
                        ▼
        ┌─────────────────────────────────┐
        │ CALCULATE CORRECTED OPTIMUM      │
        │  EXPOSURE AMOUNT VARIATION       │──S1004
        └─────────────────────────────────┘
                        │
                        ▼
        ┌─────────────────────────────────┐
        │   CALCULATE OPTIMUM EXPOSURE     │
        │            AMOUNT                │──S1005
        └─────────────────────────────────┘
                        │
                        ▼
        ┌─────────────────────────────────┐
        │        DETERMINE GAIN           │──S1006
        └─────────────────────────────────┘
                        │
                        ▼
        ┌─────────────────────────────────┐
        │  CALCULATE EXPOSURE AMOUNT       │
        │ REMOVING THE DETERMINED GAIN     │──S1007
        └─────────────────────────────────┘
                        │
                        ▼
        ┌─────────────────────────────────┐
        │    CALCULATE EXPOSURE TIME       │──S1008
        └─────────────────────────────────┘
                        │
                        ▼
        ┌─────────────────────────────────┐
        │  EXPOSURE TIME/SEND OUT GAIN     │──S1009
        └─────────────────────────────────┘
                        │
                        ▼
                    (  END  )
```

# FIG. 6

START

ENTER OPTIMUM EXPOSURE exposure' AMOUNT — S2001

S2002

YES ← case 0

NO

S2008
gain←1

S2003 case 1 — YES → S2010 gain←1

NO

S2004 case 2 — YES → S2011 gain←2

NO

S2005 case 3 — YES → S2012 gain←3

NO

S2006 case 4 — YES → S2013 gain←4

NO S2007

REGARD AS case 5

S2015
gain←4

S2009
exposurewithoutgain = exposuremin

S2016
exposurewithoutgain = exposuremax

S2014
exposurewithoutgain = exposure' −(gain−1)*exposuremax

$$rowexposure = \lfloor exposurewithoutgain/Ncolum \rfloor$$
$$pixelexposure = exposurewithoutgain - \lfloor rowexposure*Ncolum \rfloor$$
— S2017

END

## FIG. 7

PREPROCESSOR 131

CPU 132

OPTIMUM EXPOSURE AMOUNT ARITHMETIC SECTION 230

EXPOSURE TIME/GAIN ARITHMETIC SECTION 240

IMAGE DATA →

211 CONVERSION CIRCUIT

LUMINANCE Y

214 LUMINANCE HISTOGRAM PRODUCTION CIRCUIT

Ytotal →

220 DIFFERENCE ARITHMETIC SECTION

231 OPTIMUM EXPOSURE AMOUNT VARIATION CALCULATING SECTION

232 CORRECTED OPTIMUM EXPOSURE AMOUNT VARIATION CALCULATING SECTION

233 OPTIMUM EXPOSURE AMOUNT CALCULATING SECTION

241 GAIN DETERMINING SECTION

242 EXPOSURE TIME CALCULATING SECTION

EXPOSURE TIME

GAIN

250 CONTROLLING SECTION

→ EXPOSURE TIME/GAIN

VERTICAL/HORIZONTAL SYNCHRONIZATION SIGNAL, PIXEL CLOCK, ETC.

EP 2 571 256 B1

# FIG. 8

214

LUMINANCE HISTOGRAM PRODUCTION CIRCUIT

LUMINANCE Y

| COMPARER (1) | COUNTER (1) |

| COMPARER (2) | COUNTER (2) |

| COMPARER (n-1) | COUNTER (n-1) |

| COMPARER (n) | COUNTER (n) |

LUMINANCE HISTOGRAM

# FIG. 9

LINE BETWEEN BRIGHT
PIXEL AND DARK PIXEL

DARK PIXEL     BRIGHT PIXEL

NUMBER N

LUMINANCE LEVEL

EP 2 571 256 B1

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10336516 A
- US 20060044459 A
- US 20090073287 A
- US 20100066858 A